# EUROPÄISCHE PATENTSCHRIFT

(11) **EP 0 879 379 B1**
(45) Veröffentlichungstag und Bekanntmachung des Hinweises auf die Patenterteilung: **31.10.2001**
(21) Anmeldenummer: 97908152.8
(22) Anmeldetag: 27.02.1997
(51) Int. Cl.: F16L 37/12, F17C 13/00

(54) **HALTERUNGSEINRICHTUNG**
FITTING ARRANGEMENT
SYSTEME DE FIXATION

(30) Priorität: 29.02.1996 DE 29603734 U
(43) Veröffentlichungstag der Anmeldung: 25.11.1998
(73) Patentinhaber: Weh GmbH, Verbindungstechnik, D-89257 Illertissen (DE)
(72) Erfinder: WEH, Wolfgang, D-89257 Illertissen (DE); WEH, Erwin, D-89257 Illertissen (DE)
(74) Vertreter: Fiener, Josef
(86) Internationale Anmeldenummer: EP9700959
(87) Internationale Veröffentlichungsnummer: WO9732154

(56) Entgegenhaltungen:
- EP-A- 0 202 592
- DE-U- 9 204 384
- US-A- 1 297 719

## Beschreibung

Die Erfindung betrifft eine Spannzangen anordnung, insbesondere bei Spannsystemen oder Schnellverschlußkupplungen für gasförmige und/oder flüssige Medien, gemäß den Merkmalen des Oberbegriffs des Anspruchs 1.

Derartige Spannsysteme oder Schnellverschlußkupplungen ermöglichen einen schnellen und sicheren Anschluß an z. B. Gasflaschen, wodurch ein zeitaufwendiges An- und Abschrauben am Anschlußgegenstück entfällt. Die in einem Spannkolben eingehängten Spannzangen greifen dabei formschlüssig an Innenund Außengewinden, Bund-, Stutzen-, Flanschanschlüssen usw. an. Des weiteren weisen solche Spannsysteme oder Schnellverschlußkupplungen (z.B. gemäß EP-A-0 202 592) einen Aufspreizdorn auf, um den herum die Spannzangen am vorderen Ende des Aufbaus angeordnet sind, wobei die mit der Betätigungseinrichtung gekoppelte Spannzangenanordnung relativ zu dem Aufspreizdorn in Axialrichtung bewegbar angeordnet ist, um dadurch die Spannzangen in Eingriffsposition mit einem Anschlußgegenstück zu bringen oder daraus zu lösen. Die Spannzangen ragen dabei mit ihren vorderen Anschluß-Enden über die Vorderkante des Aufspreizdornes hinaus und werden beispielsweise mittels eines um sie herum angeordneten elastischen O-Ringes derart zusammengedrückt, daß die Spannzangen radial verschwenkt werden und ein Einsetzen der Schnellverschlußkupplungen in das Anschlußgegenstück erfolgen kann. Ein nochmaliges Betätigen der Betätigungseinrichtung bewirkt eine erneute axiale Verschiebung der Spannzangenanordnung relativ zu dem Aufspreizdorn, jedoch in Richtung in das Gehäuse hinein, so daß die Spannzangen durch den Aufspreizdorn radial aufgespreizt werden, wodurch die Spannzangen in sicheren und festen Eingriff mit dem Anschlußgegenstück gelangen.

Ein Nachteil eines derartigen Aufbaus ist jedoch, daß die Spannzangen, in Umfangsrichtung gesehen, radial zueinander verschiebbar sind. Dadurch werden Eingriffsprofile ausgebildet, die je nach dem Grad des radialen Abstandes der Spannzangen voneinander ein mehr oder weniger von dem Eingriffsprofil des Anschlußgegenstücks abweichendes Eingriffsprofil ausbilden. Beispielsweise kann also von einer Schnellverschlußkupplung mit sechs Spannzangen, die in einen kreisrunden Anschluß eines Gegenstückes eingreifen sollen, durch eine radiale Anordnung der Spannzangen, bei der nicht alle Spannzangen voneinander den gleichen oder in etwa den gleichen Abstand aufweisen, lediglich ein nicht ganz kreisrundes Eingriffsprofil ausgebildet werden. Beim Anschluß an z. B. das Gegenstück einer Gasflasche können daher aufgrund des nicht paßgenauen Anschlusses Verkantungen durch ungleiches Tragen auftreten, die sowohl einen erhöhten Materialverschleiß als auch eine Undichtigkeit der Anschlußverbindung zur Folge haben können. Zudem weist das Spannsystem wegen des am rückseitigen Gehäuseteil gelagerten Aufspreizdornes eine relativ große Länge auf.

Demzufolge liegt der Erfindung die Aufgabe zugrunde, eine Halterungseinrichtung der eingangs beschriebenen Art zu schaffen, die eine radiale Ausrichtung der Spannzangen in sowohl aufgespreizter als auch nicht-aufgespreizter Anordnung ermöglicht, wodurch ein paßgenauer Anschluß an ein entsprechendes Anschlußgegenstück möglich ist.

Diese Aufgabe wird gelöst durch die Merkmale des Anspruchs 1. Demgemäß ist eine Halterungseinrichtung als Halterungsstern ausgebildet und im Umfangsbereich der Spannzangen in dem vorderen Bereich des Gehäuses gelagert. Der Halterungsstern ist dabei ein- oder mehrteilig aus einem Aufspreizdorn und einem Speichenkranz aufgebaut, wobei der Speichenkranz wenigstens drei Speichen umfaßt, die im Speichenkranz Durchtrittsöffnungen für die Spannzangen ausbilden und ferner so angeordnet sind, daß die Speichen zwischen jeweils zwei Spannzangen radial ausgerichtet angeordnet sind. Dies bedeutet, daß beispielsweise im Falle von sechs Spannzangen entweder drei Speichen so angeordnet sind, daß die Spannzangen jeweils paarweise voneinander getrennt und radial ausgerichtet sind oder, in bevorzugter Weise, sechs Speichen derart ausgebildet sind, daß je eine Speiche zwischen zwei benachbarten Spannzangen angeordnet ist. Dies ermöglicht ein genaues Festlegen des radialen Abstandes der Spannzangen zueinander, die dadurch so ausgerichtet werden, daß sie den gleichen Abstand voneinander aufweisen, wodurch sichergestellt wird, daß die Spannzangen ein Eingriffsprofil ausbilden, das dem des Anschlußgegenstückes entspricht, so daß ein paßgenauer Anschluß ohne Verkantung der Eingriffsprofile ermöglicht und ungleiches Tragen vermieden wird. Wenigstens drei Speichen sind dabei aber nötig, um die gesamte Halterungseinrichtung statisch bestimmt an dem Gehäuse abzustützen. Selbstverständlich können wenigstens drei Speichen mit wenigstens drei Spannzangen auf beliebige Weise miteinander kombiniert werden, also beispielsweise vier Speichen mit acht Spannzangen oder fünf Speichen mit fünf Spannzangen usw.

Weitere vorteilhafte Ausgestaltungen sind Gegenstand der Unteransprüche. So kann der Speichenkranz des zweiteiligen Halterungssterns in bevorzugter Weise einen inneren, ringförmigen Kranz aufweisen, der integral mit den Speichen ausgebildet ist und eine Aussparung zur Aufnahme des Aufspreizdorns aufweist. Die den Aufspreizdorn aufnehmende Aussparung kann dabei eine kreisrunde Form aufweisen, in die der Aufspreizdorn mit einem entsprechenden Ansatz eingefügt wird, beispielsweise in der Art einer Paßfederverbindung. Denkbar wäre auch eine Aussparung, in die ein Gewinde eingeschnitten ist, so daß der einen Gewindezapfen aufweisende Aufspreizdorn lediglich eingeschraubt wird, oder aber auch eine eckige Aussparung, in die ein entsprechender Aufspreizdorn eingepaßt oder auf andere Weise gegen Lösen gesichert wird, beispielsweise mittels eines Sicherungsringes. Weitere hier nicht genannte Möglichkeiten der festen Verbindung zwischen Aufspreizdorn und Speichenkranz sind in Fachkreisen hinlänglich bekannt.

Des weiteren umfaßt der Speichenkranz in bevorzugter Weise einen äußeren, ringförmigen Kranz, der integral mit den Speichen ausgebildet ist, z. B. bei der Ausführung als Stanz- oder Gußteil. Zur Festlegung in axialer Richtung wird der Speichenkranz dabei mittels eines Sicherungsrings im Gehäuse gehalten. Dieser äußere, ringförmige Kranz kann jedoch an seinem Außenumfang auch mit einem Gewinde versehen sein, um den Halterungsstern zwecks einer stabilen und verdrehsicheren Anordnung in das Gehäuse einschrauben zu können, wobei dadurch zusätzlich auch eine Festlegung in axialer Richtung erfolgt. Eine derartige verdrehsichere Anordnung ist insbesondere dann von Vorteil, wenn der Aufspreizdorn mit dem Speichenkranz verschraubt ist, da dann der Aufspreizdorn von der Gehäusevorderseite her auf einfache Weise ausgeschraubt werden kann, was jedoch nur möglich ist, wenn sich der Speichenkranz nicht mitdrehen kann. Selbstverständlich kann der Speichenkranz aber auch mittels eines Preßsitzes oder auf andere dem Fachmann wohlbekannte Weise verdrehfest in dem Gehäuse angeordnet sein.

Um einen besonders einfach auszubauenden, stabilen und kompakten Aufbau des Halterungssternes zu gewährleisten, kann der Speichenkranz des Halterungssternes auch derart gestaltet sein, daß er von vorne in das Gehäuse der Schnellverschlußkupplung einsetzbar ist. Dazu wird der Halterungsstern beispielsweise als Schraubhülse ausgebildet, die in das Gehäuse von der Anschlußvorderseite her eingeschraubt wird. Diese Ausführungsform ist deshalb von Vorteil, weil der Ausbau des Halterungssternes dann nicht von der Rückseite durch das Gehäuse hindurch vorgenommen werden muß, sondern von vorne her vorgenommen werden kann. Ebenso kann ein derartiger von der Vorderseite her einsetzbarer Halterungsstern auch auf andere Weise in das Gehäuse eingesetzt und fixiert werden, beispielsweise mittels Schraubverbindung.

Selbstverständlich kann der Halterungsstern auch einteilig ausgebildet sein, d. h. der Halterungsstern einen äußeren, ringförmigen Kranz aufweisen, der über die damit integral verbundenen Speichen einstückig mit dem Aufspreizdorn verbunden ist. Auch bei dieser Ausführungsform kann der äußere Kranz wieder mit einem verdrehsicheren Außenumfangsprofil ausgebildet sein, beispielsweise mit Noppen oder einem Gewinde.

Des weiteren kann der Halterungsstern auch lediglich aus Aufspreizdorn und Speichen aufgebaut sein, wobei die Speichen entweder integral mit dem Aufspreizdorn ausgebildet sind, oder ein hinteres Ende des Aufspreizdornes ein beispielsweise keilwellenförmiges Profil aufweist, in das die Speichen in Radialrichtung eingesetzt sind. Zur Verdrehsicherung können die Speichen dabei in ein entsprechendes Profil des Gehäuses, z. B. nutenförmige Aussparungen, eingesetzt werden. Um den Halterungsstern in axialer Richtung festzulegen, wird ein Sicherungsring in das Gehäuse eingesetzt.

Bei einer derartigen erfindungsgemäßen Ausführung wird somit sichergestellt, daß die Spannzangen des Spannsystems, insbes. der Schnellverschlußkupplung vorzugsweise entweder einzeln oder paarweise auf einfache Weise mittels einem aus Aufspreizdorn und Speichenkranz aufgebauten Halterungsstern in gleichem Abstand voneinander radial ausgerichtet angeordnet werden. Dadurch wird sichergestellt, daß die Spannzangen mit ihren jeweiligen Eingriffsprofilen gleichmäßig tragend mit dem Eingriffsprofil des Anschlußgegenstücks in Eingriff kommen, woraus sich eine geringere Beanspruchung der Teile ergibt.

Nachfolgend wird die Erfindung unter Bezugnahme auf die beiliegenden Zeichnungen näher erläutert und beschrieben. Es zeigen:
- Fig. 1: ein Spannsystem in der Ausführung als Schnellverschlußkupplung mit Spannzangen in Eingriffsstellung;
- Fig. 2: eine Schnellverschlußkupplung mit Spannzangen in Eingriffsstellung, wobei der Halterungsstern als Schraubhülse ausgebildet ist;
- Fig. 3: eine Schnellverschlußkupplung mit Spannzangen in Lösestellung;
- Fig. 4a bis c: eine zweiteilige Ausführungsform eines Halterungssterns;
- Fig. 5: eine Schnellverschlußkupplung mit Spannzangen in Eingriffsstellung, wobei der Halterungsstern aus Speichen und Aufspreizdorn aufgebaut ist; und
- Fig. 6a und b: eine gegossene Ausführungsform des Halterungssterns.

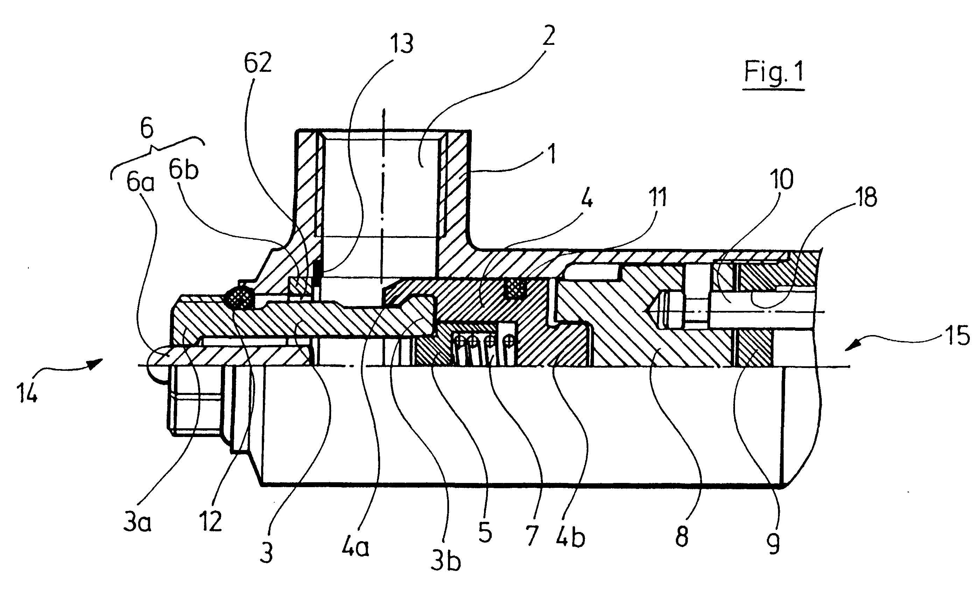

Die Erfindung wird nachfolgend am Beispiel einer Schnellverschlußkupplung für gasförmige und/oder flüssige Medien beschrieben, kann aber ebenso bei Werkzeugmaschinen als Spannsysteme für Werkzeuge Einsatz finden. Fig. 1 zeigt eine Spannzangenvorrichtung in einer Schnellverschlußkupplung, die ein vorderes Gehäuseteil 1 und ein hinteres Gehäuseteil 9 aufweist, jedoch auch aus einer einstückigen Gehäusehülse bestehen kann. Der vordere Gehäuseteil 1 umfaßt eine Spannzangenanordnung 3, 4, die aus mehreren Spannzangen 3 und einem Spannkolben 4 als axial verschiebbares Spannelement besteht. Die Spannzangen 3 sind über den Spannkolben 4 mit einem vorderen Teil 8 einer Betätigungseinrichtung gekoppelt, die im wesentlichen vom hinteren Gehäuseteil 9 aufgenommen wird. Das vordere Gehäuseteil 1 ist bei der hier dargestellten Schnellverschlußkupplung mit einer Eintritts- bzw. Austrittsöffnung 2 für flüssige und/oder gasförmige Medien versehen. An seinem den Spannzangen 3 zugekehrten vorderen Ende 4a weist der Spannkolben 4 eine Ausnehmung auf, in die ein komplementäres, dem Spannkolben 4 zugekehrtes hinteres Lager-Ende 3b der Spannzangen 3 formschlüssig eingreift. Das vordere Anschluß-Ende 3a der Spannzangen 3 ist in diesem Ausführungsbeispiel mit einem Außengewinde versehen, kann aber auch aus einem Innengewinde, einer Wulst, Nut oder anderen Profilformen bestehen, die einen formschlüssigen Profileingriff mit einem Anschlußgegenstück, z.B. einem Nippel oder einem Profilbolzen, ermöglichen.

Im Innenraum der Spannzangenanordnung 3, 4 ist ein relativ dazu axial verschiebbares, hutförmiges Fixierelement 5 angeordnet, das das hintere Lager-Ende 3b der Spannzangen 3 im vorderen Ende 4a des Spannkolbens 4 hält. Das Fixierelement 5 gewährleistet dabei eine formschlüssige Lagerung der Spannzangen 3 im Spannkolben 4 und weist auf seiner Rückseite einen Bund auf, der in seinem Inneren ein federelastisches Element 7, beispielsweise eine Druckfeder, aufnimmt.

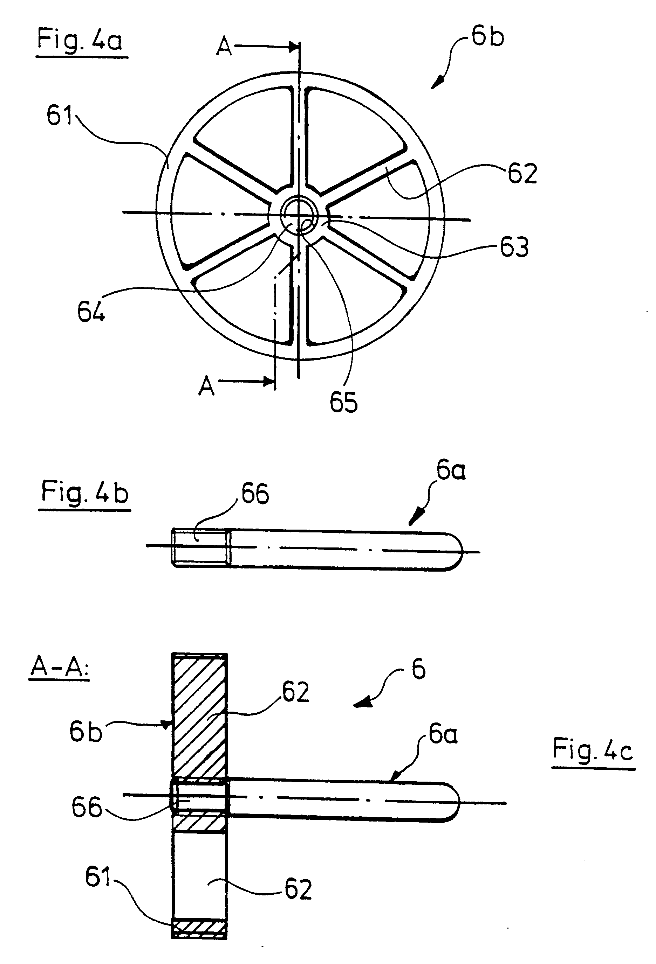

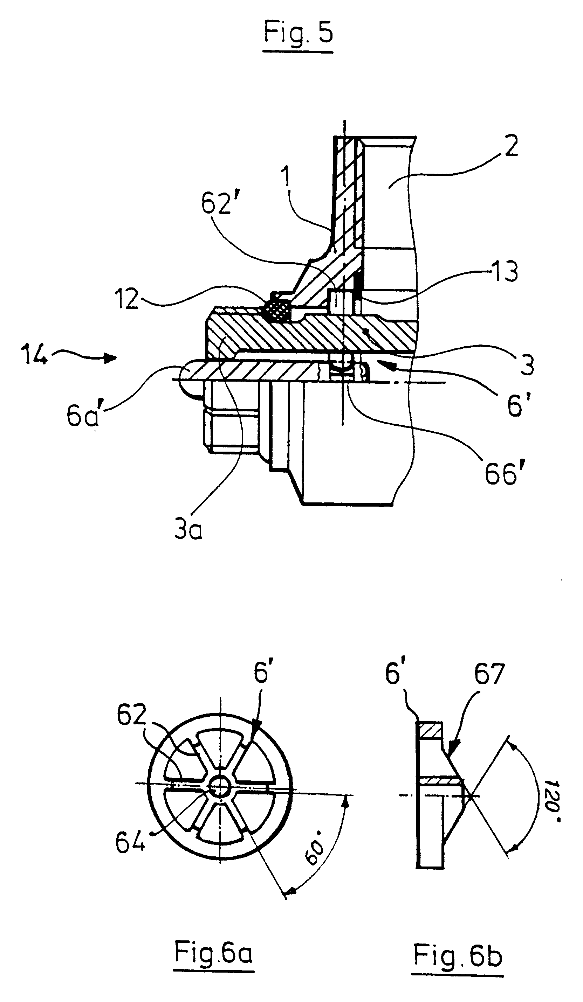

In dem vorderen Teil des Gehäuses 1 ist ein Halterungsstern 6 angeordnet, der aus einem Aufspreizdorn 6a und einem Speichenkranz 6b aufgebaut ist. Der Speichenkranz 6b weist wenigstens drei Speichen 62 auf, die miteinander Durchtrittsöffnungen für die Spannzangen 3 ausbilden, deren Anschluß-Enden 3a sich in Eingriffsstellung auf dem Aufspreizdorn 6a abstützen (Fig. 1). Durch den Halterungsstern 6 wird sichergestellt, daß die Spannzangen 3, in Umfangsrichtung gesehen, entweder paarweise oder einzeln, in etwa gleichen radialen Abstand voneinander aufweisen, d. h. daß die Speichen 62 zwischen jeweils zwei Spannzangen 3 radial ausgerichtet angeordnet sind (vgl. Fig. 4a und 6a). Wie aus Fig. 1 ersichtlich ist, ist der Halterungsstern 6 mittels eines Sicherungsringes 13 axial im vorderen Gehäuseteil 1 festgelegt. Selbstverständlich kann der Speichenkranz 6b auch mit einer Preßpassung in das Gehäuse eingepaßt sein oder andere, dem Fachmann wohlbekannte Verbindungen zwischen dem Gehäuse 1 und dem Außenumfang des Speichenkranzes 6b vorgesehen sein.

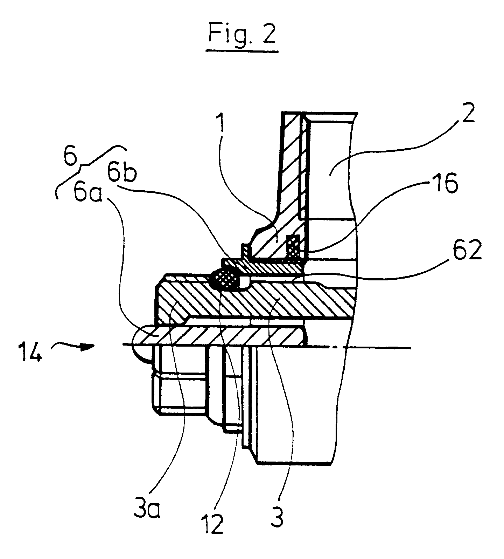

Insbesondere kann der Halterungsstern 6, wie in Fig. 2 dargestellt, mit seinem Außenkranz 6b auch als Hülse ausgebildet und in das vordere Gehäuseteil 1 eingesetzt sein, beispielsweise als von der Vorderseite 14 her in das Gehäuse einsetzbare und fixierbare Schraubhülse. Eine derartige Ausführung als von der Vorderseite 14 her einsetzbare Schraubhülse erleichtert die Montage im Falle eines Auswechselns des Halterungssternes 6. Während bei dem in Fig. 1 dargestellten Ausführungsbeispiel ein Ausbau des Halterungssternes 6 nur durch Zerlegen der Schnellverschlußkupplung von der Rückseite 15 her möglich ist, kann beim Ausführungsbeispiel der Fig. 2 der Ausbau des Halterungssternes 6 durch einfaches Ausschrauben des Außen-Speichenkranzes bzw. der Schraubhülse 6b von der Vorderseite 14 des Gehäuses 1 her getätigt werden. Jedoch ist in diesem Falle ein zusätzliches Dichtelement 16 zwischen Schraubhülse 6b und Gehäuse 1 eingefügt werden, um einen druckdichten Anschluß sicherzustellen. Ein weiterer Vorteil einer derartigen Ausführung liegt darin, daß der hülsenförmige Außen-Speichenkranz 6b in Axialrichtung gesehen eine größere Breite aufweisen kann als dies bei einem von der Rückseite her einzusetzenden Halterungsstern 6 der Fall ist, da die gesamte Wandstärke des vorderen Teils des Gehäuses 1 für die Breitenauslegung des Speichenkranzes 6b zur Verfügung steht, was zusätzlich einen hohen Drücken standhaltenden, kompakten und stabilen Aufbau des Halterungssternes 6, insbesondere aber der Speichen 62, gewährleistet.

Wie Fig. 1 weiterhin zeigt, ist auch zwischen dem Spannkolben 4 und dem vorderen Gehäuseteil 1 ein Dichtelement 11 vorgesehen, um bei der Fluidleitung zwischen Öffnung 2 und Anschluß-Ende 3a eine entsprechende Abdichtung im Gehäuseinneren sicherzustellen.

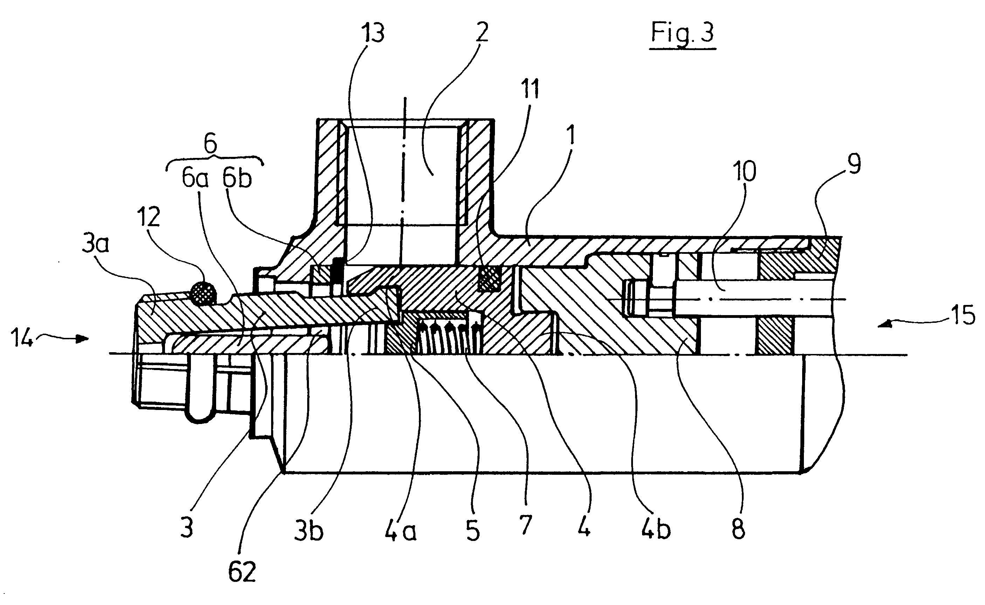

Fig. 1 zeigt die Spannzangen 3 in ihrer radial aufgespreizten Eingriffsstellung mit einem nicht näher dargestellten Anschlußgegenstück. Wird eine hier nicht näher dargestellte Betätigungseinrichtung betätigt, z. B. über einen Hebel oder Bügel, so wird relativ zum hinteren Gehäuseteil 9 in Axialrichtung nach links, d. h. in Richtung des linken Bildrandes, ein Betätigungsstift 10 verschoben, der durch einen Durchbruch 18 des hinteren Gehäuseteils 9 hindurchgeführt wird und mit dem vorderen Teil 8 der Betätigungseinrichtung verbunden ist, welches wiederum mit dem hinteren Teil 4b des Spannkolbens 4 gekoppelt ist. Somit wird die Spannzangenanordnung 3, 4 zusammen mit dem Fixierelement 5 relativ zu dem vorderen Gehäuseteil 1 und dem Halterungsstern 6 ebenfalls in Axialrichtung nach links verschoben, wie dies in Fig. 3 dargestellt ist. Die Spannzangen 3 ragen dann durch die Speichen 62 des Halterungssterns 6 hindurch und mit ihren vorderen Anschluß-Enden 3a über die Vorderkante des Aufspreizdorns 6a hinaus, wobei sie mittels eines um sie herum angeordneten, elastischen O-Ringes 12 zusammengedrückt werden. Damit die Spannzangen 3 diese radiale Verschwenkung durchführen können, muß das Fixierelement 5 gleichzeitig geringfügig zum rechten Bildrand hin in axiale Richtung ausweichen, d. h. relativ zur Spannzangenanordnung 3, 4 beweglich sein, ohne dabei aber die Arretierung der Spannzangen 3 zu lösen. Diese minimale axiale Beweglichkeit des Fixierelementes 5 wird durch das federelastische Element 7 sichergestellt. In der radial zusammengedrückten Position kann das vordere Anschluß-Ende 3a der Spannzangen 3 in ein Anschlußgegenstück mit Innengewinde eingeführt werden und dann bei erneuter Betätigung der Betätigungseinrichtung in entgegengesetzter Richtung wieder in die in der Fig. 1 dargestellte aufgespreizte Eingriffsstellung zurückgebracht werden. In dieser Eingriffsstellung nimmt der Dichtring 12 zudem die in Fig. 1 dargestellte Abdichtung gegen das Entweichen der Medien in die Umgebung vor.

Fig. 4a, 4b und 4c zeigen eine detaillierte Darstellung eines bevorzugten Ausführungsbeispiels des Halterungssterns 6, der zweiteilig aus einem Speichenkranz 6b (vgl. Fig. 4a) und einem Aufspreizdorn 6a (vgl. Fig. 4b) aufgebaut ist. Der Speichenkranz 6b weist dabei vorzugsweise sechs Speichen 62 auf, um in bevorzugter Weise sechs Spannzangen 3 voneinander durch jeweils eine Speiche 62 abzutrennen, wodurch sichergestellt wird, daß die Spannzangen 3 in Umfangsrichtung gesehen voneinander den gleichen radialen Abstand aufweisen und somit ein Eingriffsprofil ausbilden, das ein Verkanten durch ungleiches Tragen vermeidet (vgl. Fig. 4a). Dabei sind zum statisch bestimmten Abstützen des Halterungssternes 6 in dem vorderen Gehäuseteil 1 wenigstens drei Speichen 62 zweckmäßig. Im Falle von drei Speichen 62 und sechs Spannzangen 3 werden die Spannzangen 3 dann jeweils paarweise voneinander radial ausgerichtet angeordnet, was ebenfalls bereits eine gegenüber dem Stand der Technik erheblich verbesserte Anschlußsicherheit gewährt. In bevorzugter Weise entspricht jedoch die Anzahl der Spannzangen 3 der Anzahl der Speichen 62. Dabei ist jedoch zu berücksichtigen, daß wenn die Anzahl der Spannzangen 3 der Anzahl der Speichen 62 entspricht, ein Zurückschieben des Fixierelementes 5 mittels eines dornähnlichen Werkzeuges, beispielsweise einem schlanken Schraubendreher, von der Vorderseite 14 der Schnellverschlußkupplung her, um das hintere Ende 3b der Spannzangen 3 aus dem Eingriff mit dem vorderen Ende 4a des Spannkolbens 4 zu schieben, wie dies im Falle des Auswechselns der Spannzangen 3 erforderlich ist, nicht mehr ohne weiteres möglich ist, da die in Umfangsrichtung der Spannzangen 3 liegenden Räume zwischen den Spannzangen 3 durch die Speichen 62 belegt sind. Deshalb wäre es hier vorteilhaft, ein Zurückziehen des Fixierelementes 5 von der Rückseite 15 der Schnellverschlußkupplung her vorzusehen, z.B. mittels einem von dem hinteren Gehäuseteil 9 her integral oder montierbar mit dem Fixierelement 5 ausgebildeten stangenähnlichen Fortsatz, um das Fixierelement 5 durch Zugbelastung aus seiner Arretierstellung zu lösen, d.h. von den Lager-Enden 3b wegzuziehen. Denkbar wäre es auch, den Aufspreizdorn 6a innen hohlzubohren, um durch diese Bohrung hindurch das Fixierelement 5 mit einem Dorn aus dem Eingriff mit den Spannzangen-Enden 3b zu schieben, was aber hier nicht näher dargestellt ist. Ist die Anzahl der Speichen 62 geringer als die Anzahl der Spannzangen 3 kann das Fixierelement 5 weiterhin von der Vorderseite 14 des Gehäuses 1 her mittels eines Dornes aus dem Eingriff mit den Spannzangen-Enden 3b geschoben werden. Überhaupt ist jede Anordnung mit beliebiger Kombination von wenigstens drei Speichen 62 und wenigstens drei Spannzangen 3 denkbar.

Bei dem in Fig. 4a dargestellten Speichenkranz 6b sind die Speichen 62 ferner integral mit einem äußeren, ringförmigen Kranz 61 verbunden, der an seinem Außenumfang beispielsweise ein hier nicht dargestelltes Gewinde zum Einschrauben des Halterungssternes 6 in das Gehäuse 1 von der Rückseite 15 her aufweisen kann. Selbstverständlich kann der Speichenkranz 6b aber auch kein Außenumfangseingriffsprofil, wie beispielsweise ein Gewinde, aufweisen und lediglich in das Gehäuse 1 eingesetzt und mittels eines Sicherungsringes 13 axial festgelegt sein, wie dies in Fig. 1 und Fig. 3 dargestellt ist. Ebenso kann der Speichenkranz 6b auch als Schraubhülse ausgebildet sein (vgl. Fig. 2), um von der Vorderseite 14 her eingeschraubt zu werden. Denkbar ist auch, daß der äußere, ringförmige Kranz 61 auch jede andere Art von Verdrehsicherung aufweisen kann. Insbesondere im Hinblick auf ein Auswechseln des Aufspreizdornes 6a im zusammengebauten Zustand der Schnellverschlußkupplung durch von der Vorderseite 14 her bewerkstelligtes Ausschrauben muß der Speichenkranz 6b verdrehsicher im Gehäuseteil 1 gelagert sein.

Des weiteren sind die Speichen 62 integral mit einem inneren, ringförmigen Kranz 63 ausgebildet, der zur Aufnahme des Aufspreizdornes 6a eine Aussparung 64 aufweist, die am Innenumfang 65 beispielsweise mit einem Gewinde versehen sein kann. In die Aussparung 64 kann dann der Aufspreizdorn 6a eingeschraubt werden, der an seinem einen Ende einen Gewindezapfen 66 aufweist, wie dies in Fig. 4b dargestellt ist. Der Aufspreizdorn 6a kann dabei selbstverständlich auch auf jede andere in Fachkreisen wohlbekannte Art mit dem Speichenkranz 6b verbunden sein, beispielsweise mittels einer herkömmlichen Paßfederverbindung oder einer steckbaren Verbindung, wobei die Ausnehmung auch eine eckige Geometrie aufweisen und mittels eines Sicherungsringes axial festgelegt sein kann.

Fig. 4c zeigt einen Schnitt entlang der Linie A-A der Fig. 4a, bei dem der Speichenkranz 6b und der Aufspreizdorn 6a in zusammengebautem Zustand dargestellt sind.

Selbstverständlich kann das Ausführungsbeispiel auch ohne äußeren, ringförmigen Kranz 61 ausgebildet sein und/oder der Speichenkranz 6b integral mit dem Aufspreizdorn 6a verbunden sein, was aber hier nicht näher dargestellt ist.

Fig. 5 zeigt ein weiteres Ausführungsbeispiel der Erfindung, bei dem der Halterungsstern 6' zweiteilig aus einem Aufspreizdorn 6a' und wenigstens drei Speichen 62' aufgebaut ist. Der Einbauzustand eines derartigen Halterungssternes 6' in eine Schnellverschlußkupplung ist in Fig. 5 dargestellt, wobei die Speichen 62' in nutenförmigen Aussparungen im Gehäuse 1 in Umfangsrichtung der Spannzangen 3 verdrehfest gelagert sein können. Auch hier sind die Speichen 62' gegen axiales Bewegen entweder eingepaßt oder mittels eines Sicherungsringes 13 (vgl. Fig. 5) gesichert. Ferner sind die Speichen 62' in Radialrichtung weisend in ein keilwellenförmiges Profil 66' des Aufspreizdornes 6a' eingesetzt, z. B. eingepreßt. Das untere Ende der Speichen 62' und das profilierte Ende 66' des Aufspreizdornes 6a' können dabei auch einstückig ausgebildet sein. Diese Ausführung eines gestanzten oder gegossenen, einteiligen Halterungssternes 6' ist in Fig. 6a und 6b dargestellt. Aus der Seitenansicht mit Halbschnitt ist hierbei noch eine kegelförmige Einfahrschräge 67 ersichtlich, die für eine einfache Montage der Spannzangen zweckmäßig ist.

Die vorliegende Erfindung sieht also einen Halterungsstern für Spannsysteme, insbesondere Schnellverschlußkupplungen vor, mittels dem die Spannzangen, in Umfangsrichtung gesehen radial ausgerichtet werden können, wodurch ungleiches Tragen und damit Beschädigungen im Eingriffsbereich der Anschlüsse durch sich verkantende Eingriffsprofile vermieden werden.

## Patentansprüche

1. Spannzangenanordnung, insbesondere bei Spannsystemen oder Schnellverschlußkupplungen für gasförmige und/oder flüssige Medien, mit mehreren Spannzangen (3), die mit einer Betätigungseinrichtung gekoppelt und in einem Gehäuse (1) um einen Aufspreizdorn (6a) herum radial spreizbar angeordnet sind, und mit einer Halterungseinrichtung für den Aufspreizdorn (6a),
**dadurch gekennzeichnet, daß**
die Halterungseinrichtung als Halterungsstern (6; 6') ausgebildet und in dem Gehäuse (1) im Umfangsbereich der Spannzangen (3) und des gehäuseinneren Endes des Aufspreizdornes (6a) gelagert ist, sowie wenigstens drei Speichen (62; 62') umfaßt, die zwischen jeweils zwei Spannzangen (3) radial ausgerichtet angeordnet sind.

2. Spannzangenanordnung nach Anspruch 1,
**dadurch gekennzeichnet, daß**
der Halterungsstern (6) wenigstens zweiteilig aus einem Speichenkranz (6b) und dem Aufspreizdorn (6a) aufgebaut ist.

3. Spannzangenanordnung nach Anspruch 2,
**dadurch gekennzeichnet, daß**
der Speichenkranz (6b) einen inneren, ringförmigen Kranz (63) aufweist, der integral mit den Speichen (62) verbunden ist.

4. Spannzangenanordnung nach Anspruch 3,
**dadurch gekennzeichnet, daß**
der innere, ringförmige Kranz (63) eine Aussparung (64) zur Aufnahme des Aufspreizdornes (6a) aufweist.

5. Spannzangenanordnung nach einem der Ansprüche 2 bis 4,
**dadurch gekennzeichnet, daß**
der Speichenkranz (6b) einen äußeren, ringförmigen Kranz (61) aufweist, der integral mit den Speichen (62) verbunden ist.

6. Spannzangenanordnung nach einem der Ansprüche 2 bis 5,
**dadurch gekennzeichnet, daß**
der Aufspreizdorn (6a) mit dem Speichenkranz (6b) verschraubt ist.

7. Spannzangenanordnung nach Anspruch 1,
**dadurch gekennzeichnet, daß**
der Halterungsstern (6) einen mit den Speichen (62) integral ausgebildeten äußeren, ringförmigen Kranz (61) aufweist, der über die Speichen (62) einstückig mit dem Aufspreizdorn (6a) verbunden ist.

8. Spannzangenanordnung nach einem der Ansprüche 2 bis 7,
**dadurch gekennzeichnet, daß**
der äußere, ringförmige Kranz (61) zum Einschrauben in das Gehäuse (1) am Außenumfang ein Gewinde aufweist.

9. Spannzangenanordnung nach Anspruch 1,
**dadurch gekennzeichnet, daß**
der Halterungsstern (6') aus Aufspreizdorn (6a') und Speichen (62') aufgebaut ist, wobei ein Ende des Aufspreizdorns (6a') ein keilwellenförmiges Profil (66') aufweist, in das die Speichen (62') in Radialrichtung eingesetzt sind.

10. Spannzangenanordnung nach einem der Ansprüche 1 bis 9,
**dadurch gekennzeichnet, daß**
der Halterungsstern (6; 6') durch einen Sicherungsring (13) axial im Gehäuse (1) festgelegt ist.

11. Spannzangenanordnung nach einem der Ansprüche 1 bis 10,
**dadurch gekennzeichnet, daß**
der Halterungsstern (6; 6') als Schraubhülse ausgebildet ist und von der Anschlußvorderseite (14) her in das Gehäuse (1) einsetzbar und fixierbar ist.

## Claims

1. Clamping jaw arrangement, particularly in clamp systems or snap-fit couplings for gaseous and/or liquid media, in which several clamping jaws (3) are coupled to an actuating device and are located in a radially spreadable manner in a casing (1) around a spreader mandrel (6a), and including a fitting arrangement for the spreader mandrel (6a),
**characterised in that**
the fitting arrangement is in the form of a star-shaped fitting (6;6') being mounted in the casing (1) in the peripheral area of the clamping jaws (3) and at the inner end of the spreader mandrel (6a), and comprises at least three spokes (62;62'), which are radially aligned between two respective clamping jaws (3).

2. Clamping jaw arrangement according to claim 1,
**characterised in that**
the star-shaped fitting (6) is constructed in at least two parts from a spoke ring (6b) and the spreader mandrel (6a).

3. Clamping jaw arrangement according to claim 2,
**characterised in that**
the spoke ring (6b) has an internal annular ring (63), which is integrally connected to the spokes (62).

4. Clamping jaw arrangement according to claim 3,
**characterised in that**
the internal annular ring (63) has an aperture (64) for receiving the spreader mandrel (6a).

5. Clamping jaw arrangement according to one of claims 2 to 4,
**characterised in that**
the spoke ring (6b) has an external annular ring (61), which is integrally connected to the spokes (62).

6. Clamping jaw arrangement according to one of claims 2 to 5,
**characterised in that**
the spreader mandrel (6a) is screwed to the spoke ring (6b).

7. Clamping jaw arrangement according to claim 1,
**characterised in that**
the star-shaped fitting (6) has an external annular ring (61) integrally formed with the spokes (62), and which is connected via the spokes (62) in one piece with the spreader mandrel (6a).

8. Clamping jaw arrangement according to one of claims 2 to 7,
**characterised in that**
the external annular ring (61) has on its outer periphery a thread for screwing into the casing (1).

9. Clamping jaw arrangement according to claim 1,
**characterised in that**
the star-shaped fitting (6') is built up from the spreader mandrel (6a') and spokes (62'), one end of the spreader mandrel (6a') having a spline-shaped profile (66'), into which the spokes (62') are inserted in the radial direction.

10. Clamping jaw arrangement according to one of claims 1 to 9,
**characterised in that**
the star-shaped fitting (6;6') is secured axially in the casing (1) by a securing ring (13).

11. Clamping jaw arrangement according to one of claims 1 to 10,
**characterised in that**
the star-shaped fitting (6;6') is in the form a screw sleeve, and is insertable and securable into the casing (1) from the forward side (14) of the connection.

## Revendications

1. Système de fixation, notamment dans le cas de systèmes de serrage ou de coupleurs à fermeture rapide, pour des fluides sous forme gazeuse et/ou liquide, muni de plusieurs pinces de serrage (3) couplées à un dispositif d'actionnement et placées dans un boîtier (1) de manière radialement extensible autour d'un mandrin extensible (6a), et muni d'un dispositif de serrage pour le mandrin extensible (6a), **caractérisé en ce que** le dispositif de serrage est formé en étoile de serrage (6, 6') et placé dans le boîtier (1), dans la partie périphérique des pinces de serrage (3) et de l'extrémité du mandrin extensible (6a) située à l'intérieur du boîtier, et qu'il comprend au moins trois rayons (62, 62') placés respectivement entre deux pinces de serrage (3) et orientés radialement.

2. Système de fixation selon la revendication 1, **caractérisé en ce que** l'étoile de serrage (6) est constituée, au moins en deux parties, d'une couronne à rayons (6b) et du mandrin extensible (6a).

3. Système de fixation selon la revendication 2, **caractérisé en ce que** la couronne à rayons (6b) présente une couronne intérieure (63) de forme annulaire, raccordée intégralement aux rayons (62).

4. Système de fixation selon la revendication 3, **caractérisé en ce que** la couronne intérieure (63) de forme annulaire présente un évidement (64) pour loger le mandrin extensible (6a).

5. Système de fixation selon l'une des revendications 2 à 4, **caractérisé en ce que** la couronne à rayons (6b) présente une couronne extérieure de forme annulaire (61), intégralement raccordée aux rayons (62).

6. Système de fixation selon l'une des revendications 2 à 5, **caractérisé en ce que** le mandrin extensible (6a) est vissé avec la couronne à rayons (6b).

7. Système de fixation selon la revendication 1, **caractérisé en ce que** l'étoile de fixation (6) présente une couronne extérieure (61) de forme annulaire formée intégralement avec les rayons (62) et raccordée en une seule pièce au mandrin extensible (6a) à l'aide des rayons (62).

8. Système de fixation selon l'une des revendications 2 à 7, **caractérisé en ce que** la couronne extérieure (61) de forme annulaire présente un filetage sur le pourtour extérieur pour le vissage dans le boîtier (1).

9. Système de fixation selon la revendication 1, **caractérisé en ce que** l'étoile de serrage (6') est constituée du mandrin extensible (6a') et des rayons (62'), une extrémité du mandrin extensible (6a') présentant un profil en forme d'arbre cannelé (66') dans lequel sont insérés les rayons (62') en direction radiale.

10. Système de fixation selon l'une des revendications 1 à 9, **caractérisé en ce que** l'étoile de serrage (6, 6') est fixée axialement dans le boîtier (1) à l'aide d'un circlip (13).

11. Système de fixation selon l'une des revendications 1 à 10, **caractérisé en ce que** l'étoile de serrage (6, 6') est formée comme douille filetée et est insérable dans le boîtier (1) depuis le côté avant du raccordement (14) et peut y être fixée.
